# EUROPÄISCHE PATENTSCHRIFT

(11) **EP 0 709 758 B1**
(45) Veröffentlichungstag und Bekanntmachung des Hinweises auf die Patenterteilung: **03.05.2000**
(21) Anmeldenummer: 95115624.9
(22) Anmeldetag: 04.10.1995
(51) Int. Cl.: G05D 23/19

(54) **Elektrisches Heizgerät und Verfahren zu dessen Betreiben**
Electric heating apparatus and method of its use
Appareil de chauffage électrique et procédé pour son utilisation

(30) Priorität: 25.10.1994 DE 4438030
(43) Veröffentlichungstag der Anmeldung: 01.05.1996
(73) Patentinhaber: KKW Kulmbacher Klimageräte-Werk GmbH, D-95326 Kulmbach (DE)
(72) Erfinder: Rodecker, Artur, D-95326 Kulmbach (DE); Shirkani, Ghanbar, D-95119 Naila (DE)
(74) Vertreter: Zenz, Joachim Klaus, Dipl.-Ing.

(56) Entgegenhaltungen:
- DE-A- 4 213 072
- GB-A- 2 151 050
- GB-A- 2 204 966
- US-A- 4 333 002

## Beschreibung

Die Erfindung bezieht sich auf ein elektrisches Heizgerät mit mindestens einem Heizkörper, einer den Heizkörper steuernden Leistungsschalteinrichtung und einer Regeleinrichtung, die mindestens einen Heizkörper über die Leistungsschalteinrichtung in Abhängigkeit von wenigstens einer Meßgröße innerhalb eines von der Gerätenennleistung begrenzten Leistungsbereichs regelt. Ferner bezieht sich die Erfindung auf ein Verfahren zum Betreiben eines elektrischen Heizgerätes.

Herkömmliche Heizgeräte können nur mit der maximalen Leistung (Nennleistung) betrieben werden, für die sie ausgelegt sind. In der Praxis werden elektrische Heizgeräte, beispielsweise Durchlauferhitzer, Speicherheizgeräte u.a. mit unterschiedlichen Nennleistungen produziert und auf Lager gelegt, um ein dem Bedarf angepaßtes Geräteleistungsangebot zur Verfügung zu stellen. Bisher neigte der Konsument dazu, einen Sicherheitszuschlag bei der Geräteleistung vorzusehen, d.h. überdimensionierte Raum- und Wasserheizgeräte einzusetzen. Überdimensionierte Geräte haben ein ungünstigeres Regelverhalten, da sie nur über einen begrenzten (unteren) Leistungsbereich genutzt werden können. Zum Zwecke eines möglichst sparsamen Energieeinsatzes ist es geboten, Heizgeräte mit engem Toleranzbereich an den Regelbedarf anzupassen. Die Folge ist eine enge Stufung der Heizgeräte-Nennleistungen, eine Vielfalt unterschiedlicher Geräte und damit höhere Produktions- und Lagerhaltungskosten.

Aus der DE-OS 42 13 072 ist es bekannt, elektrische Speicherheizgeräte mit einem Aufladeregler auszustatten, bei dem unterschiedliche maximale Speicherwärmemengen am Aufstellort voreingestellt werden können.

Der Erfindung liegt die Aufgabe zugrunde, die Produktions- und Lagerhaltungskosten elektrischer Heizgeräte zu verringern.

Verfahrensmäßig besteht die erfindungsgemäße Lösung dieser Aufgabe darin,
daß die Einsatzbedingungen am Aufstellort des Heizgeräts bestimmt werden;
daß in Anpassung an die Einsatzbedingungen die gewünschte Gerätenennleistung ausgewählt wird, die kleiner oder gleich einer der Geräte-Auslegung entsprechenden maximalen Nennleistung ist; und
daß die gewünschte Gerätenennleistung für den Benutzer invariabel über der Regeleinrichtung zugeordnete Einstellmittel eingeprägt wird.

Das elektrische Heizgerät der eingangs genannten Gattung zeichnet sich erfindungsgemäß dadurch aus, daß der Regeleinrichtung Einstellmittel zugeordnet sind, die eine für den Benutzer invariable Voreinstellung unterschiedlicher Gerätenennleistungen erlauben.

Die Erfindung hat zahlreiche Vorteile, die vor allem im ökonomischen Bereich liegen. Das Problem der Produktion und Lagerhaltung von elektrischen Heizgeräten, beispielsweise Durchlauferhitzern in den üblichen sechs Leistungsstufungen wird reduziert auf ein Universalgerät mit Nennleistungskodierung. Diese Kodierung wird beim Aufstellen des Geräts vom Installateur eingegeben. Ein beispielsweise auf eine maximale Nennleistung von 27 kW ausgelegter Durchlauferhitzer kann am Aufstellort auf die kundenseitig benötigten 18 kW begrenzt werden. Diese Begrenzung der Nennleistung kann ganz einfach entweder durch mechanische Einstellmittel, wie DIP-Schalter, Leiterbrücken, Potentiometer oder unterbrechbare Leitungsverbindungen geschehen, oder es kann ein einfaches elektronisches oder mechanisches (Kodierstecker) Programmiergerät zur Nennleistungseingabe verwendet werden, das mit der Regeleinrichtung und über diese mit der Leistungsschalteinrichtung gekoppelt ist. Die Mehrkosten für von Haus aus überdimensionierte Heizkörper werden durch die Produktions- und Lagerhaltungseinsparungen in der Regel überkompensiert. Der Hersteller braucht in vielen Fällen nur noch ein Universalgerät anzubieten, das aufgrund wesentlich höherer Stückzahl relativ preiswert herzustellen ist. Die Leistungsschalteinrichtung, die in einer in der Praxis bereits bewährten Weise aus einer TRIAC-Anordnung bestehen kann, wird bei niedrigen Nennleistungen sogar entlastet, so daß die Wärmeabfuhr erleichtert ist.

Besondere Vorteile ergeben sich auch für den Bereich der Speicherheizgeräte. Neben den generellen Vorteilen von Universalgeräten für Produktion und Lagerhaltung gelingt es, die Gerätenennleistung besonders genau an den effektiven Bedarf am Einsatzort anzupassen und dadurch den Energieverbrauch zu minimieren. Die Regelungsautomatik ist infolge der Anpassung der jeweiligen Gerätenennleistung an die Einsatzbedingungen in einem besonders effektiven Regelbereich wirksam, so daß von dieser Seite her auch mit Energieeinsparungen zu rechnen ist.

Vorzugsweise enthalten die Einstellmittel einen Speicher, der verschiedene Gerätenennleistungen in codierter Form speichert. Der Installateur ruft die gewählte Gerätenennleistung auf und prägt sie in einer für den Konsumenten invariablen Weise der Regeleinrichtung und/oder der Leistungsschalteinrichtung ein.

Eine besonders einfache Möglichkeit zur Einprägung der Gerätenennleistung durch Begrenzung der Nennleistung besteht darin, daß die Leistungsschalteinrichtung durch Pulspakete gesteuert und die Gerätenennleistung durch Festlegung eines maximalen Tastverhältnisses zwischen Pulspaketlänge und Lücke eingestellt wird.

Weitere Ausgestaltungen und vorteilhafte Weiterbildungen der Erfindung sind in den Unteransprüchen gekennzeichnet.

Im folgenden wird die Erfindung anhand von in der Zeichnung schematisch dargestellten Ausführungsbeispielen näher erläutert. In der Zeichnung zeigen:
- Fig. 1: ein Prinzipschaltbild einer Aufladesteuerung eines Speicherheizgeräts mit einer für den Benutzer unzugänglichen Kodiereinrichtung zur Einprägung der Geräte-Nennleistung;
- Fig. 2: ein vereinfachtes Blockschaltbild einer Heizkörpersteuerung für Durchlauferhitzer mit elektronischen Einstellmitteln zur Einstellung der Durchlauferhitzer-Nennleistung; und
- Fig. 3: eine schematische Darstellung verschiedener Heizkörper-Ansteuersignale bei unterschiedlichen Gerätenennleistungen.

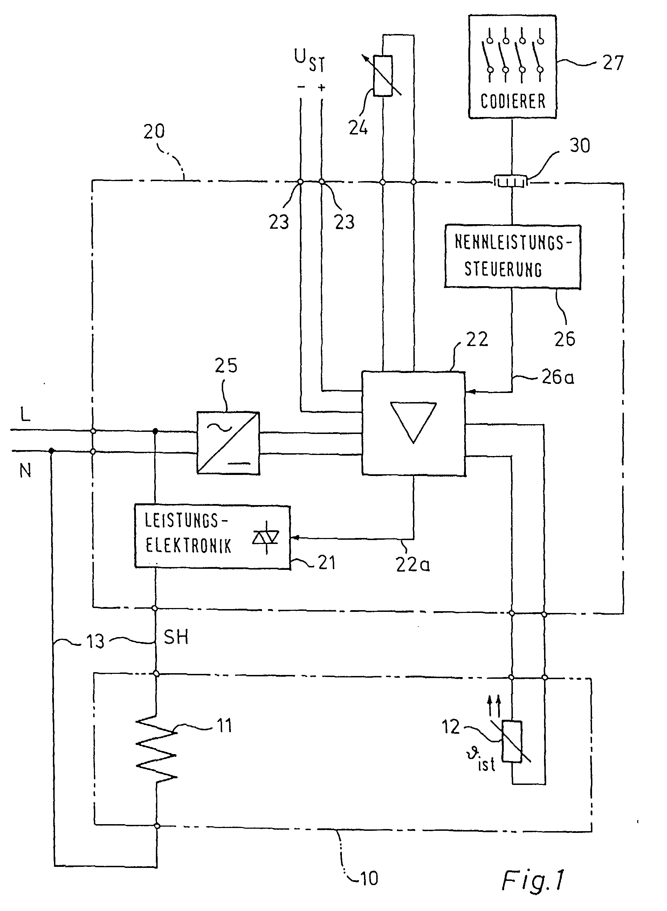

Das in Fig. 1 dargestellte Prinzipschaltbild der Aufladesteuerung ist ähnlich derjenigen gemäß Fig. 1 der DE-OS 42 13 072. In einem Speicherkern 10 des Speicherheizgeräts sind eine Widerstandsheizung 11 zum Aufladen des Speicherkerns und ein PTC-Wärmefühler 12 zum Messen der Speicherkerntemperatur ϑᵢₛₜ angeordnet. Die Widerstandsheizung 11 kann anstelle der in Fig. 1 gezeigten einphasigen Anordnung auch dreiphasig oder umschaltbar ausgebildet sein. Ein Aufladeregler 20 regelt den Aufladestrom der über Leitungen 13 an die Klemmen SH und N angeschlossenen Speicherkern-Widerstandsheizung 11. Die Steuerung des Aufladestroms geschieht mit Hilfe einer Leistungselektronik 21, die im dargestellten Ausführungsbeispiel als TRIAC-Anordnung ausgebildet ist. Die Ansteuerung der TRIAC-Anordnung 21 erfolgt von einem Regelverstärker 22 aus über eine Steuerleitung 22a. Der Regelverstärker 22 steuert die TRIAC-Anordnung 21 im dargestellten Ausführungsbeispiel in Abhängigkeit von mehreren Einflußgrößen, nämlich von der am Restwärmefühler 12 gemessenen Ist-Temperatur ϑᵢₛₜ im Speicherkern 10; einer Steuerspannung U_{ST}, die von einem in der Zeichnung nicht dargestellten Zentral- bzw. Gruppensteuergerät über die Klemmen 23 dem Aufladeregler 20 zugeführt wird; einem über ein externes Potentiometer 24 einstellbaren Sollwert-Korrekturwert; und den erfindungsgemäß vorgesehenen Nennleistungseinstellmitteln, auf die weiter unten noch genauer eingegangen wird.

Wenn die Aufladung des Speicherheizgeräts unabhängig von einer Zentral-Gruppensteuerung gesteuert werden soll, so werden die Klemmen 23 kurzgeschlossen, oder sie bleiben unbeschaltet. Damit wird die Aufladung nur durch den vom Potentiometer 24 vorgegebenen Sollwert und/oder einen nicht dargestellten, geeigneten Raumtemperaturfühler, der mit dem Regelverstärker 22 in geeigneter Weise gekoppelt ist, beeinflußt.

Für die Stromversorgung der elektronischen Baugruppen des Aufladereglers 20 ist die Stromversorgungsbaugruppe 25 vorgesehen, die an die Netzanschlußklemmen L und N angekoppelt ist. Über die Netzspannungsklemmen L und N werden der Aufladeregler 20 und der wenigstens eine Widerstandsheizkörper 11 von dem Energieversorgungsunternehmen während der Freigabe-bzw. Niedrigtarifzeiten mit Spannung versorgt.

Das beschriebene Speicherheizgerät kann mit der in der o.g. OS 42 13 072 beschriebenen Einstellmöglichkeit der maximalen Speicheraufladung ausgestattet sein. Zu diesem Zweck können beispielsweise mehrere Steckplätze am Aufladeregler mit Pins zum Aufstecken eines Jumpers vorgesehen sein, mit dessen Hilfe die maximale Speicherkerntemperatur und damit das Maximum der im Speicherkern speicherbaren Wärmemenge eingestellt werden kann.

In dem Ausführungsbeispiel gemäß Fig. 1 ist eine Nennleistungssteuerung 26 über eine Leitungsanordnung 26a mit dem Regelverstärker 22 gekoppelt. Die Nennleistungssteuerung 26 wirkt auf den Regelverstärker 22 derart ein, daß der Aufladeregler die Leistungselektronik 21 auf eine vorgegebene Gerätenennleistung begrenzt.

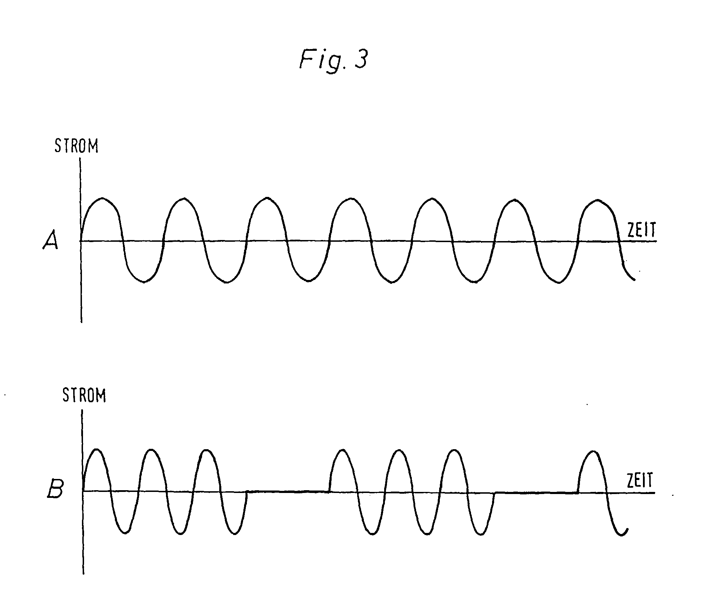

Der Nennleistungssteuerblock 26 ist im Aufladeregler 20 integriert. Ein Codiergerät 27 kann über eine Steckbuchse 30 mit dem Nennleistungssteuerblock 26 gekoppelt werden. Bei maximaler Nennleistung, d.h. ohne Umprogrammierung, wird die Leistungselektronik 21 von dem Regelverstärker 22 mit einem maximalen Tastverhältnis von Impulspaketlänge und -lücke angesteuert. Bei dieser, der maximalen Leistung entsprechenden Ansteuerung wird die Widerstandsheizung 11 mit dem vollen Strom von der Leitung L entsprechend Darstellung in Fig. 3, Kurve A, beaufschlagt. Bei Begrenzung der Gerätenennleistung über die Nennleistungssteuerung 26 auf z.B. 2/3 der herstellerseitig ausgelegten maximalen Nennleistung wird das Tastverhältnis des über die Leitung 22a ausgegebenen Pulspaketes entsprechend geändert; dadurch kann die Leistungselektronik nur noch Strompakete entsprechend Fig. 3B durchlassen. Es kann jede beliebige Gerätenennleistung eingestellt werden.

Bei dem dargestellten Ausführungsbeispiel ist das Codiergerät 27 vom Heizungsinstallateur über den Gerätestecker 30 anschließbar. Durch geeignete Auswahl der gewünschten und nach den Aufstellbedingungen ausgewählten Gerätenennleistung auf dem Codiergerät 27 wird das Speicherheizgerät für den Benutzer invariabel auf die Gerätenennleistung eingestellt. In dem Nennleistungssteuerblock 26 ist ein geeigneter nicht-flüchtiger Speicher, beispielsweise in Form eines EPROMs angeordnet, der vom Codiergerät 27 aufgerufen und zur Einstellung der Gerätenennleistung aktiviert werden kann. Die Gerätekombination 26, 27 kann auch so vorgesehen sein, daß die geeignete Gerätenennleistung durch Aufschmelzen von Schmelzsicherungen für höhere Nennleistungen invariabel eingestellt wird. Ist das Gerät einmal für beispielsweise 18kW Nennleistung eingestellt, so läßt sich nur noch eine niedrigere Gerätenennleistung, aber keine höhere Gerätenennleistung einstellen. Bei Verwendung einer elektronischen Nennleistungssteuerung kann die Gerätenennleistung aber auch stufenlos eingeprägt werden.

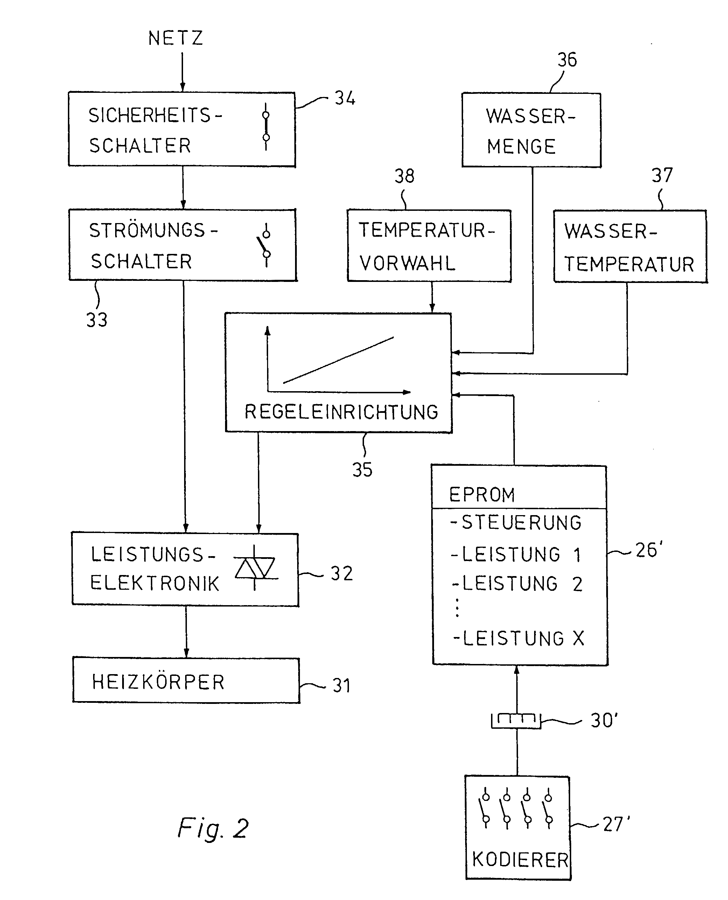

Fig. 2 zeigt die erfindungsgemäß vorgesehene Einstellbarkeit der Gerätenennleistung in Zuordnung zu einem Durchlauferhitzer.

Der Durchlauferhitzer ist in dem beschriebenen Ausführungsbeispiel in an sich bekannter Weise ausgestattet mit einer Heizkörperanordnung 31, einer die Heizkörperanordnung mit Strom versorgenden Leistungselektronik in Form einer TRIAC-Anordnung 32, einem Strömungsschalter 33, der den Versorgungsstrom zur Leistungselektronik 32 im Ruhezustand des Wassers unterbricht, ferner einem Sicherheitsschalter 34, der bei festgestellten Störungen oder Übertemperatur den Versorgungsstrom zum Heizkörper 31 unterbricht, aber bei Normalbetrieb geschlossen ist, und einer Regeleinrichtung 35, welche die Leistungselektronik 32 in Abhängigkeit verschiedener Meßgrößen, bedarfsabhängig steuert. In dem beschriebenen Ausführungsbeispiel sind dem Durchlauferhitzer zwei Meßeinrichtungen 36 und 37 und ein Sollwertsteller zur Wassertemperatur-Vorwahl zugeordnet. Die Funktionen des Durchlauferhitzers und dessen Regeleinrichtung 35 sind an sich bekannt und brauchen hier nicht mehr erläutert zu werden.

Neu sind die Nennleistungseinstellmittel 26', 27' und 30, die zur Einstellung der Gerätenennleistung auf die Regeleinrichtung 35 einwirken. Die Funktionsweise der Nennleistungseinstellmittel entspricht derjenigen der Einstellmittel 26, 27 und 30 bei dem Speicherheizgerät gemäß Fig. 1. Hierauf wird zur Vermeidung von Wiederholungen Bezug genommen.

Anstelle der elektronischen Nennleistungssteuerung können auch mechanische Mittel, beispielsweise, Jumper, DIP-Schalter Potentiometer o. dgl. oder unterbrechbare Leitungsverbindungen vorgesehen sein. Wichtig ist, daß die Nennleistungseinstellmittel für den Benutzer invariabel oder nicht zugänglich sind, damit eine nicht fachgerechte Änderung der Nennleistung ausreichend zuverlässig verhindert ist.

Die beschriebene Einstellung der Gerätenennleistung ist nicht auf die beiden angegebenen Heizgerätearten beschränkt, sondern prinzipiell bei allen elektrischen Heizgeräten mit ähnlichen Vorteilen einsetzbar. Der Gerätehersteller kann das Gerät auf die höchste denkbare Nennleistung einstellen, von der aus der Installateur eine Begrenzung der Nennleistung vornehmen kann.

Ebenso ist es möglich, in ggf. einer anderen Ausführungform das Gerät werksseitig auf die niedrigste vorgesehene Nennleistung einzustellen, die dann vom Installationsfachmann auf die tatsächlich benötigte Leistung angehoben werden kann.

## Patentansprüche

1. Elektrisches Heizgerät mit mindestens einem Heizkörper (11; 31), einer den Heizkörper steuernden Leistungsschalteinrichtung (21; 32) und einer Regeleinrichtung (22; 35), die mindestens einen Heizkörper über die Leistungsschalteinrichtung in Abhängigkeit von wenigstens einer Meßgröße innerhalb eines von der Gerätenennleistung begrenzten Leistungsbereichs steuert,
**dadurch gekennzeichnet**,
daß der Regeleinrichtung (22; 35) Einstellmittel (26, 27; 26', 27') zugeordnet sind, die eine für den Benutzer invariable Voreinstellung unterschiedlicher Gerätenennleistungen erlauben.

2. Elektrisches Heizgerät nach Anspruch 1, dadurch gekennzeichnet, daß die Einstellmittel einen vorzugsweise nichtflüchtigen Speicher (26; 26') aufweisen, der die voreingestellte Gerätenennleistung in kodierter Form speichert.

3. Elektrisches Heizgerät nach Anspruch 1 oder 2, dadurch gekennzeichnet, daß die Steuerung des mindestens einen Heizkörpers (11; 31) über die Leistungsschalteinrichtung (21;32) als Pulspaketsteuerung vorgesehen ist und daß die Gerätenennleistung durch Begrenzung eines maximalen Tastverhältnisses zwischen Pulspaketlänge und Pulslücke voreinstellbar ist.

4. Elektrisches Heizgerät nach Anspruch 3, dadurch gekennzeichnet, daß die Leistungsschalteinrichtung aus einer Thyristoranordnung, insbesondere einer Triac-Anordnung in allen Leitungsphasen besteht.

5. Elektrisches Heizgerät nach einem der Ansprüche 1 bis 4, dadurch gekennzeichnet, daß die Leistungsschalteinrichtung (21; 32) von der Regeleinrichtung (22; 35) in Abhängigkeit von zusätzlichen Regelparametern, von denen wenigstens einer ein Temperaturmeßwert ist, innerhalb des voreingestellten Leistungsbereichs kontinuierlich regelbar ist.

6. Elektrisches Heizgerät nach einem der Ansprüche 1 bis 5 in der Verwendung als elektrischer Durchlauferhitzer, dadurch gekennzeichnet, daß ein Mittel (37) zum Erfassen wenigstens einer Wassertemperatur mit der Regeleinrichtung (35) gekoppelt ist.

7. Verwendung des elektrischen Heizgeräts nach einem der Ansprüche 1 bis 5 als elektrisches Speicherheizgerät.

8. Elektrisches Heizgerät nach einem der Ansprüche 1 bis 5, dadurch gekennzeichnet, daß die Einstellmittel DIP-Schalter, Leiterbrücken (Jumper), unterbrechbare Leitungsverbindungen, für den Benutzer nicht zugängliche Potentiometer oder Kodierstecker aufweisen, deren Schaltzustände die voreingestellte Gerätenennleistung kodieren.

9. Elektrisches Heizgerät nach einem der Ansprüche 1 bis 5, dadurch gekennzeichnet, daß die Einstellmittel (26; 26') mit einem Programmiergerät (27; 27') koppelbar sind, über das die Auswahl der Gerätenennleistung software-gesteuert erfolgen kann.

10. Elektrisches Heizgerät nach einem der Ansprüche 1 bis 9, dadurch gekennzeichnet, daß die Regeleinrichtung (22, 35) und mindestens ein Nennleistungs-Einstellmittel zu einer Baueinheit zusammengefaßt sind.

11. Verfahren zum Betreiben eines elektrischen Heizgeräts, das für eine maximale Nennleistung ausgelegt wird und über eine Regeleinrichtung und eine Leistungsschalteinrichtung in Abhängigkeit von wenigstens einer Meßgröße bedarfsabhängig geregelt wird,
**dadurch gekennzeichnet**,
daß die Einsatzbedingungen am Aufstellort bestimmt werden;
daß in Anpassung an die Einsatzbedingungen die gewünschte Gerätenennleistung ausgewählt wird, die kleiner oder gleich der maximalen Nennleistung ist; und
daß die gewünschte Gerätenennleistung für den Benutzer invariabel oder nicht zugänglich über der Regeleinrichtung zugeordnete Einstellmittel eingeprägt wird.

12. Verfahren nach Anspruch 11, dadurch gekennzeichnet, daß zum Einstellen der Gerätenennleistung ein externes Codiergerät an einen Anschluß angeschaltet und die Programmierung der Gerätenennleistung über das Codiergerät vorgenommen wird.

## Claims

1. Electric heating device including at least one heating body (11; 31), a power switching device (21; 32) controlling the heating body and a control device (22; 35), which controls the at least one heating body via the power switching device in dependence on at least one measured parameter within a power range limited by the rated power of the device, characterised in that associated with the control device (22; 35) there are adjusting means (26, 27; 26', 27') which permit presetting of different rated powers of the device which may not be changed by the user.

2. Electrical heating device as claimed in Claim 1, characterised in that the adjusting means have a preferably non-transient memory store (26; 26'), which stores the preset rated power of the device in coded form.

3. Electrical heating device as claimed in Claim 1 or 2, characterised in that the control of the at least one heating body (11; 31) via the power switching device (21; 32) is provided in the form of pulse packet control and that the rated power of the device may be preset by limiting a maximum mark space ratio between the pulse packet length and pulse gap.

4. Electrical heating device as claimed in Claim 3, characterised in that the power switching device comprises a thyristor arrangement, particularly a Triac arrangement, in all the circuit phases.

5. Electrical heating device as claimed in one of Claims 1 to 4, characterised in that the power switching device (21; 32) is continuously controllable within the preset power range by the control device (22; 35) in dependence on additional control parameters, of which at least one is a measured temperature value.

6. Electrical heating device as claimed in one of Claims 1 to 5 in use as an electrical continuous flow heater, characterised in that means (37) for detecting at least one water temperature is coupled to the control device (35).

7. Use of the electrical heating device as claimed in one of Claims 1 to 5 as an electrical storage heater.

8. Electrical heating device as claimed in one of Claims 1 to 5, characterised in that the adjusting means have DIP switches, conductive bridges (jumpers), interruptible conductive connections, potentiometers which are not accessible to the user or coded plugs, whose switching states define the predetermined rated power of the device in coded form.

9. Electrical heating device as claimed in one of Claims 1 to 5, characterised in that the adjusting means (26; 26') may be coupled to a programming device (27; 27') by means of which the selection of the rated power of the device may be effected in a manner controlled by software.

10. Electrical heating device as claimed in one of Claims 1 to 9, characterised in that the control device (22, 35) and at least one rated power adjusting means are combined to constitute a unit.

11. Method of operating an electrical heating device which is designed for a maximum rated power and is controlled in accordance with requirements by means of a control device and a power switching device in dependence on at least one measured parameter, characterised in that the operating conditions are determined at the installation location; that the desired rated power of the device, which is smaller than or equal to the maximum rated power, is selected to match the operating conditions; and that the desired rated power of the device is input via adjusting means associated with the control device in a manner which may not be changed by or is inaccessible to the user.

12. Method as claimed in Claim 11, characterised in that for the purpose of adjusting the rated power of the device an external coding device is connected to a connector and the programming of the rated power of the device is effected by means of the coding device.

## Revendications

1. Appareil de chauffage électrique comportant au moins un corps de chauffe (11 ; 31), un dispositif de commutation de puissance (21 ; 32) qui commande ce corps de chauffe, et un dispositif de régulation (22 ; 35) qui commande au moins un corps de chauffe par l'intermédiaire du dispositif de commutation de puissance, en fonction d'au moins une grandeur mesurée, à l'intérieur d'un domaine de puissance limité par la puissance nominale de l'appareil, caractérisé par le fait qu'au dispositif de régulation (22 ; 35) sont associés des moyens de réglage (26, 27 ; 26', 27') qui permettent un préréglage invariable pour l'utilisateur de différentes puissances nominales de l'appareil.

2. Appareil de chauffage électrique selon la revendication 1, caractérisé par le fait que les moyens de réglage présentent une mémoire de préférence rémanente (26 ; 26') qui mémorise sous forme codée la puissance nominale préréglée de l'appareil.

3. Appareil de chauffage électrique selon l'une des revendications 1 et 2, caractérisé par le fait que la commande du ou des corps de chauffe (11 ; 31) par l'intermédiaire du dispositif de commutation de puissance (21 ; 32) est prévue sous forme de commande par paquets d'impulsions et que la puissance nominale de l'appareil est préréglable par limitation d'un rapport cyclique maximal entre la longueur des paquets d'impulsions et l'intervalle entre impulsions.

4. Appareil de chauffage électrique selon la revendication 3, caractérisé par le fait que le dispositif de commutation de puissance est constitué d'un dispositif à thyristors, en particulier d'un dispositif à triac dans toutes les phases de puissance.

5. Appareil de chauffage électrique selon l'une des revendications 1 à 4, caractérisé par le fait que le dispositif de commutation de puissance (21 ; 32) est réglable de façon continue par le dispositif de régulation (22 ; 35) en fonction de paramètres supplémentaires de régulation, dont au moins un est une valeur mesurée de température, à l'intérieur du domaine de puissance préréglé.

6. Appareil de chauffage électrique selon l'une des revendications 1 à 5 utilisé comme chauffe-eau électrique instantané, caractérisé par le fait qu'un moyen (37) de saisie d'au moins une température d'eau est couplé au dispositif de régulation (35).

7. Utilisation de l'appareil de chauffage électrique selon l'une des revendications 1 à 5 comme appareil de chauffage électrique à accumulation.

8. Appareil de chauffage électrique selon l'une des revendications 1 à 5, caractérisé par le fait que les moyens de réglage présentent des commutateurs DIP, des cavaliers, des liaisons par ligne pouvant être interrompues, des potentiomètres non accessibles à l'utilisateur ou des fiches de codage dont les états codent la puissance nominale préréglée de l'appareil.

9. Appareil de chauffage électrique selon l'une des revendications 1 à 5, caractérisé par le fait que les moyens de réglage (26 ; 26') peuvent être couplés à un appareil de programmation (27 ; 27') par l'intermédiaire duquel la sélection de la puissance nominale de l'appareil peut avoir lieu sous la commande de logiciel.

10. Appareil de chauffage électrique selon l'une des revendications 1 à 9, caractérisé par le fait que le dispositif de régulation (22 ; 35) et au moins un moyen de réglage de la puissance nominale sont réunis en un ensemble.

11. Procédé d'exploitation d'un appareil de chauffage électrique qui est conçu pour une puissance nominale maximale et réglé suivant les besoins par l'intermédiaire d'un dispositif de régulation et d'un dispositif de commutation de puissance en fonction d'au moins une grandeur mesurée, caractérisé par le fait
que les conditions d'emploi sont déterminées sur le lieu d'installation,
que la puissance nominale désirée de l'appareil, qui est inférieure ou égale à la puissance nominale maximale, est choisie de manière adaptée aux conditions d'emploi, et
que la puissance nominale désirée de l'appareil est gravée de manière invariable ou inaccessible pour l'utilisateur par des moyens de réglage associés au dispositif de régulation.

12. Procédé selon la revendication 11, caractérisé par le fait que pour le réglage de la puissance nominale de l'appareil, un appareil externe de codage est connecté à une borne et la programmation de la puissance nominale de l'appareil est effectuée par l'intermédiaire de cet appareil de codage.
